# FASCICULE DE BREVET EUROPEEN

(11) **EP 2 962 340 B1**
(45) Date de publication et mention de la délivrance du brevet: **07.12.2016**
(21) Numéro de dépôt: 14707383.7
(22) Date de dépôt: 28.02.2014
(51) Int. Cl.: H01M 2/10, H01M 2/12

(54) **DISPOSITIF DE SÉCURITÉ POUR UNE BATTERIE DE GÉNÉRATEURS ÉLECTROCHIMIQUES AU LITHIUM**
SICHERHEITSVORRICHTUNG FÜR EINE BATTERIE VON ELEKTROCHEMISCHEN LITHIUMGENERATOREN
SAFETY DEVICE FOR A BATTERY OF LITHIUM ELECTROCHEMICAL GENERATORS

(30) Priorité: 01.03.2013 FR 1351850; 15.03.2013 US 201313839421
(43) Date de publication de la demande: 06.01.2016
(73) Titulaire: SAFT, 93170 Bagnolet (FR)
(72) Inventeur: TURBE, Benoît, 33800 Bordeaux (FR); CALMEJANE, Jérôme, 33750 Saint Germain du Puch (FR); VASSELIN, Benoît, 33160 Saint Médard en Jalles (FR); GENIN, Philippe, 33200 Bordeaux (FR)
(74) Mandataire: Hirsch & Associés
(86) Numéro de dépôt international: PCT/EP2014/053915
(87) Numéro de publication internationale: WO 2014/131875

(56) Documents cités:
- EP-A1- 2 109 165
- EP-A1- 2 403 050
- EP-A2- 2 244 318
- DE-A1-102007 063 174
- GB-A- 2 334 812

## Description

### DOMAINE TECHNIQUE

Le domaine technique auquel se rapporte l'invention est celui des batteries de générateurs électrochimiques au lithium. L'invention concerne plus particulièrement un dispositif de sécurité pour une batterie de générateurs électrochimiques au lithium.

### ETAT DE LA TECHNIQUE

Un générateur électrochimique est un dispositif de production d'électricité dans lequel de l'énergie chimique est convertie en énergie électrique. L'énergie chimique est constituée par des composés électrochimiquement actifs déposés sur au moins une face d'électrodes disposées dans le générateur électrochimique. L'énergie électrique est produite par des réactions électrochimiques au cours d'une décharge du générateur électrochimique. Les électrodes, disposées dans un conteneur, sont connectées électriquement à des bornes de sortie de courant qui assurent une continuité électrique entre les électrodes et un consommateur électrique auquel le générateur électrochimique est associé. Les bornes de sortie de courant positive et négative peuvent être fixées soit sur les parois de faces opposées du conteneur du générateur électrochimique soit sur la paroi d'une même face du conteneur.

Plusieurs générateurs électrochimiques peuvent être connectés ensemble en série ou en parallèle en fonction de la tension nominale de fonctionnement du consommateur électrique et de la quantité d'énergie qu'il est prévu de fournir à ce consommateur. Les générateurs électrochimiques sont alors placés dans un boîtier commun, constitué en général d'un coffre et d'un couvercle, et l'on désigne généralement l'ensemble du boîtier et de la pluralité de générateurs électrochimiques qu'il renferme par le terme de batterie. Dans un souci de commodité de branchement électrique entre des générateurs électrochimiques placés dans une batterie, les bornes de sortie de courant positive et négative sont souvent fixées sur la paroi d'une même face du conteneur.

Une anomalie dans le fonctionnement de la batterie peut être causée par le dysfonctionnement de l'un des générateurs électrochimiques (court-circuit, surcharge,...) ou par une perturbation extérieure (choc, élévation de la température, etc.) ou encore par une défaillance du système électronique gérant l'état de charge ou d'autres paramètres des générateurs de la batterie.

Par exemple, lorsqu'un générateur électrochimique au lithium est soumis à une surcharge, sa température augmente. L'augmentation de température entraîne une augmentation du courant de charge qui favorise encore l'augmentation de température. Si le générateur ne dispose pas d'un système de refroidissement suffisant pour évacuer la chaleur émise, celui-ci se retrouve en situation d'emballement thermique : l'augmentation de température est alimentée par le générateur lui-même. L'augmentation incontrôlée de la température du générateur entraîne la génération de gaz et leur expansion à l'intérieur du conteneur du générateur. Cette expansion peut entraîner une augmentation de la pression interne dans le générateur, qui va ouvrir le système de sécurité d'évacuation des gaz. En cas de libération de gaz chauds, dont la température peut atteindre 650°C, ces gaz viennent au contact des autres générateurs de la batterie. Il existe alors un risque pour que le phénomène d'emballement thermique se propage à l'ensemble des générateurs de la batterie, ce qui conduit à la destruction totale de la batterie. Ce risque est particulièrement important dans le cas des générateurs de type lithium-ion.

Il est connu des solutions techniques de refroidissement des gaz par le système batterie seul. Néanmoins, ceux-ci ne permettent pas actuellement un refroidissement des gaz suffisant pour qu'à la sortie du système de sécurité d'évacuation des gaz, comprenant généralement un trou d'évent, les gaz soient suffisamment refroidis. Cela les rend sujet à une auto-inflammation et peut donc générer des flammes à la sortie du trou d'évent. Ces flammes présentent alors un danger pour l'équipement intégrant la batterie ainsi que pour ses utilisateurs.

Le but de l'invention est de proposer un dispositif de sécurité permettant de contenir en un premier temps les éventuels gaz émis par des générateurs électrochimiques au lithium puis de les évacuer hors d'un habitacle de manière à éviter toute contamination dudit habitacle ainsi que les risques d'auto-inflammation des gaz émis. Un dispositif de sécurité ayant une pièce d'occultation pouvant se déchirer sous l'action de la pression d'un gaz produit par la batterie et placé sur la paroi du coffre est décrit dans les documents EP2244318 et EP2109165.

### RESUME DE L'INVENTION

L'invention a pour objet un dispositif de sécurité pour une batterie de générateurs électrochimiques au lithium comprenant :
- un coffre destiné à être placé dans un habitacle et configuré pour loger une pluralité de générateurs électrochimiques au lithium, ledit coffre comprenant une pluralité de parois assemblées, une ouverture permettant l'introduction des générateurs électrochimiques ;
- un couvercle destiné à être agencé de manière étanche aux gaz sur l'ouverture du coffre permettant l'introduction des générateurs électrochimiques ;
- une ouverture formant évent située dans une des parois du coffre ou située dans le couvercle,
- un conduit comprenant deux ouvertures où une des ouvertures est destinée à être reliée de manière étanche aux gaz à l'ouverture formant évent du coffre ;
- une pièce d'occultation destinée à être disposée de manière étanche aux gaz à une ouverture d'une paroi de l'habitacle et à la deuxième ouverture du conduit, et où ladite pièce d'occultation comprend une partie adaptée à se déchirer à une pression seuil, Ps ;
où les parois du coffre, le couvercle, le conduit et la pièce d'occultation sont solidarisés entre eux de manière à assurer une étanchéité aux gaz jusqu'à une pression supérieure à la pression seuil, Ps, et où les matériaux du coffre, du couvercle, du conduit et de la pièce d'étanchéité, susceptibles d'être en contact avec des gaz émis par les générateurs électrochimiques au lithium, sont des matériaux dimensionnés pour résister aux gaz émis par lesdits générateurs électrochimiques au lithium et résistants au moins à une température de 150°C.

Un tel dispositif de sécurité pour batterie selon l'invention, permet de garantir la sortie de gaz pour qu'il n'y ait pas d'auto-inflammation et permet une évacuation maitrisée des gaz ainsi qu'une tenue aux variations de pression de l'enveloppe de la batterie, c'est-à-dire du coffre et du couvercle entourant la batterie.

En effet, grâce à l'invention, l'évacuation des gaz est canalisée et permet ainsi d'éviter un dégagement des gaz dans l'environnement de la batterie, par exemple dans une cabine d'avion ou de tout autre habitacle. Un tel agencement du dispositif de sécurité permet donc d'envelopper de façon hermétique la batterie en résistant à la surpression générée par le dégagement de gaz.

Dans le cadre de la présente invention, on entend par « générateur électrochimique au lithium » un générateur comprenant au moins une électrode, ladite électrode comprenant une matière électrochimiquement active soit constituée d'un matériau apte à insérer et/ou à désinsérer du lithium, soit constituée de lithium métal ; selon un mode de réalisation, le générateur électrochimique au lithium est choisi parmi la liste constituée d'un accumulateur Li Ion, d'un accumulateur Li polymère, d'une pile au lithium. Dans le cas d'une pile au lithium, le couple électrochimique est par exemple choisi parmi la liste constituée de : Li/SO2Cl2, Li/SOCl2, Li/SO2, Li/MnO2, Li/CFx - MnO2, Li/FeS2, Li / V205, Li/I2, Li/SVO (« SVO » pour « Silver oxide + vanadium pentoxide », soit oxyde d'argent et pentoxyde de vanadium).

Dans le cadre de la présente invention, on entend par « habitacle » un espace clos où l'on peut disposer une pluralité de générateurs électrochimiques au lithium ; un habitacle peut faite partie d'un véhicule ou d'un bâtiment ; en général un habitacle est destiné à recevoir de manière fréquente des personnes physiques, notamment des passagers ; il peut aussi être un lieu où des personnes physiques sont susceptibles de faire des passages occasionnels, par exemple pour procéder à des opérations de contrôle dans l'espace où sont disposés les générateurs électrochimiques au lithium.

Dans le cadre de la présente invention, on entend par « matériau susceptible d'être en contact avec des gaz émis par les générateurs électrochimiques au lithium, dimensionné pour résister aux gaz émis par lesdits générateurs électrochimiques au lithium » un matériau présentant une résistance aux gaz émis par les générateurs électrochimiques au lithium pendant un temps suffisant pour permettre la circulation souhaitée des gaz et résister à l'environnement jusqu'à ce que la pièce d'occultation se déchire à la pression seuil, Ps ; le choix et le dimensionnement d'un tel matériau pour les différents composants d'un dispositif de sécurité selon la présente invention relève des connaissances générales d'un homme du métier qui sait choisir le type de matériau, son épaisseur et tout autre paramètre pertinent en fonction du cahier des charge de la batterie.

Dans le cadre de la présente invention, on entend par « étanche aux gaz » un agencement étanche où des gaz émis par les générateurs électrochimiques au lithium sont confinés jusqu'à une pression supérieure à celle de la pression seuil, Ps, et qui résiste par exemple à une pression interne desdits gaz supérieure ou égale à 1,5 fois la pression seuil, Ps, par exemple à une pression comprise entre 2 et 5 fois la pression seuil, Ps.

Selon différents modes de réalisations qui peuvent se combiner selon toutes les solutions techniquement réalisables :
- la pression seuil, Ps, est comprise entre 0,5 bar et 5 bar, par exemple supérieure ou égale à 1 bar et/ou inférieure ou égale à 2 bar ;
- la paroi de l'habitacle est une partie d'une carlingue d'aéronef et la pression seuil, Ps, est comprise entre 1 bar et 5 bar, par exemple supérieure ou égale à 1,5 bar et/ou inférieure ou égale à 3 bar ; cet agencement du dispositif de sécurité permet d'envelopper la batterie de sorte à ce qu'elle résiste aux éventuelles dépressions liée aux montées en altitude qui peuvent se produire quand la batterie est logée dans un avion ;
- le conduit est un tuyau rigide ou un tuyau souple rigidifié ; selon un mode de réalisation, le tuyau a un diamètre compris entre 10 mm et 100 mm et une longueur comprise entre 0,50 m et 3 m ;
- le coffre est formé d'une pluralité de plaques en un matériau choisi parmi la liste constituée de l'aluminium et de ses alliages, des aciers, du titane et de ses alliages et lesdites plaques sont pliées et/ou soudées entre elles ; selon un mode de réalisation, les plaques pliées et/ou soudées entre elles sont au nombre de cinq, assemblées en forme parallélépipède, avec une plaque de fond opposée à l'ouverture du coffre, deux plaques latérales d'une première épaisseur e1 disposées face à face et deux autres plaques latérales d'une deuxième épaisseur e2 disposées face à face, où l'ouverture formant évent est aménagée dans une des plaques d'épaisseur e2 et où l'épaisseur e1 est comprise entre 1 et 2 mm et l'épaisseur e2 est comprise entre 1,5 fois et 3 fois l'épaisseur e1 ;
- la pièce d'occultation est en continuité de matière et comprend des zones amincies formant au moins une partie adaptée à se déchirer à la pression seuil, Ps ; selon un mode de réalisation, une zone amincie forme une courbe fermée autour d'une partie susceptible de se détacher au moins partiellement de la pièce d'occultation quand ladite zone amincie se déchire à la pression seuil, Ps ; selon un mode de réalisation, la zone amincie formant une courbe fermée est une rainure, par exemple en V ou en U;
- la pièce d'occultation est constituée d'une pluralité de matériaux reliés entre eux par des liaisons et au moins une liaison est adaptée à se déchirer à une pression seuil, Ps ;
- le dispositif de sécurité comprend en outre un dispositif de refroidissement du conduit.

La présente invention vise également un véhicule comprenant un habitacle séparé de l'extérieur par une paroi, dans laquelle est pratiquée une ouverture ouvrant sur l'extérieur, et un dispositif de sécurité ci-dessus, disposé dans l'habitacle, dont la pièce d'occultation est fixée de manière étanche aux gaz à ladite ouverture. Selon un mode de réalisation, le véhicule est choisi dans la liste constituée d'un aéronef, d'un moyen de transport ferroviaire, d'un moyen de transport routier, d'un moyen de transport maritime ou fluvial. On parlera alors d'applications mobiles. Dans ce type de dispositifs, l'extérieur est en général constitué de l'air libre qui entoure le véhicule. Il est néanmoins possible d'envisager que l'extérieur soit constitué d'un espace confiné aménagé pour recevoir des gaz émis par les générateurs électrochimiques au lithium

La présente invention vise également un bâtiment comprenant un habitacle séparé de l'extérieur par une paroi, dans laquelle est pratiquée une ouverture ouvrant sur l'extérieur, et un dispositif de sécurité ci-dessus, disposé dans l'habitacle, dont la pièce d'occultation est fixée de manière étanche aux gaz à ladite ouverture. L'habitacle est alors défini comme la pièce où est logée la batterie de générateurs électrochimiques au lithium. On parlera alors d'applications statiques. L'extérieur peut être constitué d'une seconde pièce (ou un espace confiné) aménagée pour recevoir des gaz émis par les générateurs électrochimiques au lithium ou de l'air libre qui entoure la pièce où est logée la batterie.

La présente invention vise également un procédé mettant en oeuvre un dispositif de sécurité ci-dessus, où, en cas de la libération de gaz par un générateur électrochimique disposé dans le coffre, le gaz est refroidi dans le conduit et produit un déchirement de la partie adaptée à se déchirer à une pression seuil, Ps, de la pièce d'occultation quand le gaz atteint la pression seuil, Ps.

### BREVE DESCRIPTION DES FIGURES

La Figure 1 est une représentation schématique d'un dispositif de sécurité selon l'invention pour une batterie de générateurs électrochimiques au lithium.
La Figure 2 est une représentation schématique du coffre et du couvercle pour une batterie de générateurs électrochimiques représentés dans la Figure 1.
La Figure 3 est une représentation schématique des composants du coffre pour une batterie de générateurs électrochimiques représenté dans la Figure 1.

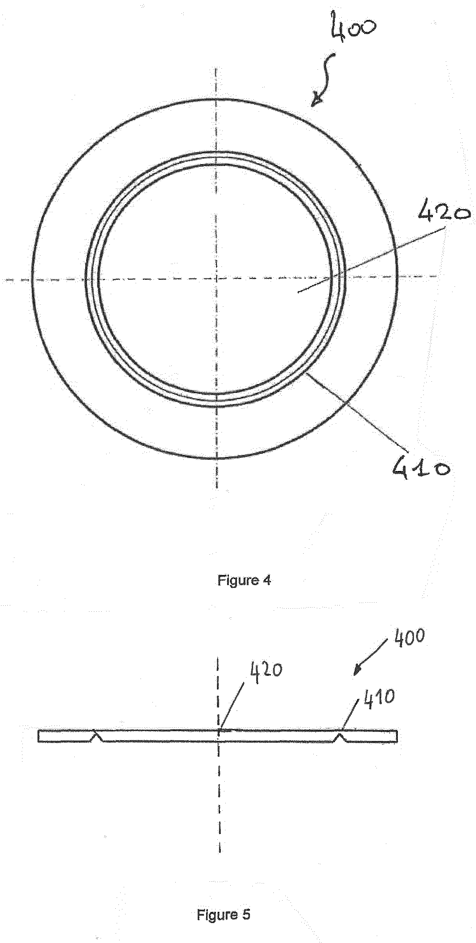

Les Figures 4 et 5 sont des représentations schématiques de la pièce d'occultation du dispositif de sécurité représenté dans la Figure 1.

Sur les différentes figures, les éléments analogues sont désignés par des références identiques. En outre, les différents éléments ne sont pas nécessairement représentés à l'échelle afin de présenter une vue permettant de faciliter la compréhension de l'invention.

### EXPOSE DE MODES DE REALISATION DE L'INVENTION

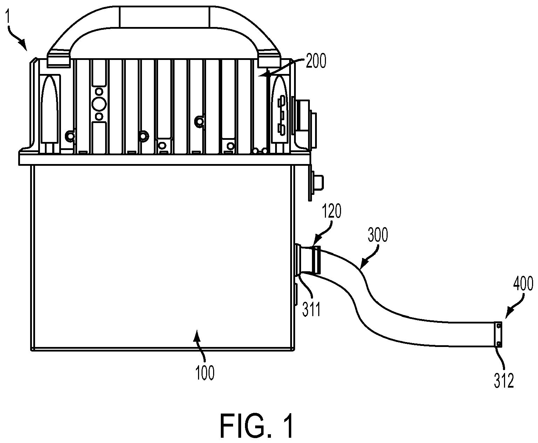

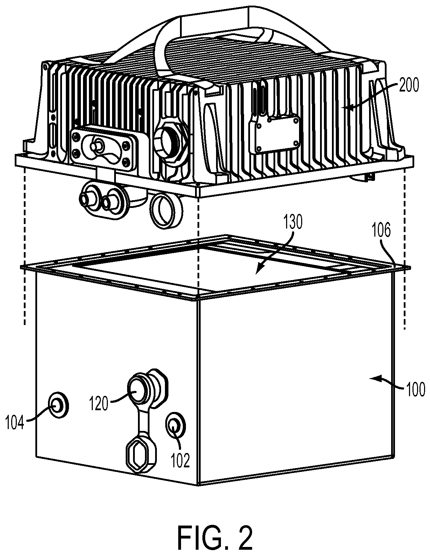

En regard des figures 1 et 2, l'invention concerne un dispositif de sécurité 1 pour une batterie de générateurs électrochimiques au lithium comprenant un coffre 100, un couvercle 200 et un conduit 300. Ces générateurs électrochimiques au lithium sont intrinsèquement étanches en utilisation nominale. Néanmoins, ils peuvent relâcher des gaz chauds en cas de dysfonctionnement ou en cas d'utilisation abusive.

Le coffre 100 est destiné à être placé dans un habitacle et configuré pour loger une pluralité de générateurs électrochimiques au lithium. Les électrodes des générateurs électrochimiques disposées dans le coffre, sont connectées électriquement à des bornes de sortie de courant qui assurent une continuité électrique entre les électrodes et un consommateur électrique auquel le générateur électrochimique est associé. Dans le cas présent, les bornes de sortie de courant sont situées dans le couvercle 200.

Le coffre 100 comprend également des plots 102, 104 permettant une mise à la masse du coffre ; ceux-ci peuvent être fixés soit sur les parois de faces opposées du coffre du générateur électrochimique soit sur la paroi d'une même face du coffre, comme illustré sur la figure 2.

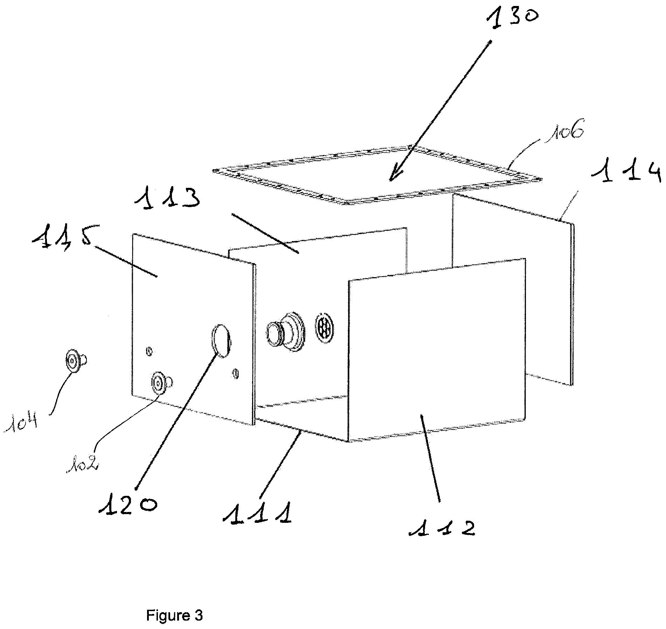

En outre, le coffre comprend une pluralité de parois 111, 112, 113, 114, 115 assemblées comme illustré sur la figure 3. Le coffre comprend en outre une première ouverture 120 formant évent dans une des parois, et une seconde ouverture 130 permettant l'introduction des générateurs électrochimiques.

Le couvercle 200 est destiné à être agencé de manière étanche aux gaz sur la seconde ouverture 130 du coffre permettant l'introduction des générateurs électrochimiques.

A cet effet, un moyen de liaison 106 est agencé autour de la seconde ouverture 130 du coffre entre le couvercle 200 et le coffre 100 afin d'assurer une fixation robuste entre le coffre et le couvercle tout en garantissant l'étanchéité aux gaz.

En regard de la figure 3, ce moyen de liaison 106 comporte par exemple un cadre de renfort traversé par une pluralité de moyen de fixation assurant la fixation solidaire entre le coffre 100 et le couvercle 200. De préférence, les moyens de fixations sont des vis. En outre, le moyen de liaison 106 comporte un joint agencé de sorte à assurer l'étanchéité aux gaz.

Un tel agencement permet de garantir une excellente étanchéité ainsi qu'une tenue à la surpression. En outre l'utilisation de vis comme moyen de fixation assure une fiabilité de fixation tout en rendant possible le démontage du dispositif.

D'autres moyens de liaison sont envisageables afin de réaliser l'interface entre le couvercle et le coffre en garantissant une excellente étanchéité ainsi qu'une tenue à la surpression. Cette interface peut être réalisée au moyen de soudure, de sangles, d'un système de verrouillage, par exemple un système de verrouillage à bascule connu sous le nom de « grenouillère » (« toggle latches » en anglais).

Le conduit 300 comprend deux ouvertures 311, 312 où une des ouvertures 311 est destinée à être reliée de manière étanche aux gaz à la première ouverture 120 formant évent du coffre.

Ce conduit permet d'assurer l'évacuation des gaz à l'extérieur de l'équipement intégrant les générateurs électrochimiques.

Le conduit est de préférence en matériau supportant une température de 200°C en continu, de nature métallique, composite ou élastomère, et résistante au gaz fluorés. Bien entendu, plus le matériau sera conducteur thermique, meilleur sera le refroidissement des gaz, ce refroidissement étant lié à la capacité d'échange thermique de la canalisation par convection naturelle.

En outre, ce refroidissement du gaz en circulation dans le conduit peut être optimisé par exemple par convection forcée, c'est-à-dire en envoyant un flux d'air frais pulsé sur le conduit, ou par un autre moyen de refroidissement du type échangeur, par exemple par un circuit de refroidissement liquide.

Avantageusement, le conduit 300 est en outre un tuyau rigide ou un tuyau souple rigidifié.

On entend par « tuyau rigide », un tuyau qui n'est pas susceptible de se déformer dans des conditions d'utilisation standard, par exemple qui ne se déforme pas significativement si on essaie de le tordre à la main ; un exemple de tuyau rigide consiste en un tuyau métallique, par exemple un tuyau en titane dont l'épaisseur de paroi est comprise entre 0,5 mm et 5 mm.

On entend par « tuyau souple », un tuyau qui peut être facilement plié, par exemple à la main. Un tuyau souple rigidifié est constitué d'un tuyau souple rigidifié par une structure externe qui le rend difficilement déformable dans les conditions d'utilisation standard ; une telle structure peut être constituée par exemple d'un gainage, d'un grillage ou de fils métalliques entourant le tuyau souple.

De manière préférée, le diamètre du tuyau est compris entre 10 mm et 100 mm et la longueur de celui-ci est comprise entre 0,50 m et 3 m. Ce dimensionnement résulte d'un compromis entre le volume de gaz dégagé par un élément et la température du gaz qui dépendent du type d'élément électrochimique, du débit de gaz moyen, du diamètre de canalisation de l'évent et de la longueur du conduit.

Cet agencement du conduit permet d'assurer un refroidissement suffisant des gaz à l'extrémité du conduit 312 opposée à l'ouverture 311 destinée à être reliée de manière étanche aux gaz à la première ouverture 120 formant évent du coffre.

Ainsi, un tel conduit permet d'obtenir une évacuation des gaz vers l'extérieur de l'équipement intégrant les générateurs électrochimiques sans fuite avec le milieu dans lequel est confiné l'équipement.

Le dispositif de sécurité 1 comporte en outre une pièce d'occultation 400 destinée à être disposée de manière étanche aux gaz en fonctionnement nominal à l'interface entre une ouverture d'une paroi de l'habitacle et à la deuxième ouverture 312 du conduit. La pièce d'occultation 400 comprend une partie 410 adaptée à se déchirer à une pression seuil notée Ps. Bien entendu, cette pression seuil Ps est inférieure à la pression à laquelle le conduit peut résister. La pièce d'occultation sera davantage détaillée par la suite.

Les parois du coffre, le couvercle, le conduit et la pièce d'occultation sont solidarisés entre eux de manière à assurer une étanchéité aux gaz jusqu'à une pression supérieure à la pression seuil Ps.

De préférence, la pression seuil Ps est comprise entre 0,5 bar et 5 bars, par exemple supérieure ou égale à 1 bar et/ou inférieure ou égale à 2 bars.

De manière préférée, la paroi de l'habitacle est une partie d'une carlingue d'aéronef et la pression seuil Ps est comprise entre 1 bar et 5 bars. Par exemple, la pression seuil Ps est supérieure ou égale à 1,5 bar et/ou inférieure ou égale à 3 bars.

En outre, les matériaux du coffre, du couvercle, du conduit et de la pièce d'étanchéité, susceptibles d'être en contact avec des gaz émis par les générateurs électrochimiques au lithium, sont des matériaux dimensionnés pour résister aux gaz émis par lesdits générateurs électrochimiques au lithium et résistants au moins à une température de 150 °C.

Parmi les matériaux susceptibles d'être en contact avec des gaz émis par les générateurs électrochimiques au lithium, on peut citer l'aluminium et ses alliages, le cuivre et ses alliages, le laiton, les aciers nickelés, les aciers inoxydables, le titane et ses alliages, le nickel et ses alliages, les polyoléfines, les polymères fluorés, les polyesters saturés, les phénoplastes, les polyamides, les aramides, les résines époxydes, les nitriles, les silicones.

Il est par ailleurs possible de choisir d'autres matériaux susceptibles d'être en contact avec des gaz émis par les générateurs électrochimiques au lithium en effectuant le test suivant :
- on immerge un échantillon du matériau à tester dans l'électrolyte non aqueux utilisé pour un générateur électrochimique de type Li-Ion (par exemple un électrolyte constitué d'un mélange de solvants comprenant du carbonate de propylène (PC), du carbonate de diméthyle (DMC) et du carbonate d'éthylène (EC) et d'un sel de lithium LiPF6 de concentration 1.5 M.) pendant une durée de 21 jours à une température de 60 °C ;
- on mesure la perte de masse de l'échantillon, et on observe si son intégrité est préservée ; on peut également procéder à des observations pendant des périodes intermédiaires, par exemple au bout de 7 jours et/ou de 14 jours ;
- on considère qu'un matériau est susceptible d'être en contact avec des gaz émis par les générateurs électrochimiques au lithium si sa perte de masse est inférieure ou égale à 10 %, de préférence inférieure ou égale à 5 % de perte en masse après 21 jours d'immersion et que son intégrité est préservée au sens où on n'observe pas de fissure traversant l'échantillon.

Selon un mode de réalisation, le coffre est formé d'une pluralité de plaques en un matériau tel que l'aluminium et ses alliages, des aciers, du titane et ses alliages. De plus, lesdites plaques sont pliées et/ou soudées entre elles.

De préférence, les plaques pliées et/ou soudées entre elles sont au nombre de 5 et assemblées en forme de parallélépipède, avec une plaque de fond 111 opposée à l'ouverture 130 du coffre. Deux plaques latérales 112, 113 d'une première épaisseur e1 sont disposées face à face. Deux autres plaques latérales 114, 115 d'une deuxième épaisseur e2 sont également disposées face à face. L'ouverture formant évent est aménagée dans une des plaques d'épaisseur e2. L'épaisseur e1 est comprise entre 1 et 2 mm et l'épaisseur e2 est comprise entre 1,5 fois et 3 fois l'épaisseur e1.

Cet agencement du coffre combinant différentes épaisseurs des plaques permet d'obtenir une bonne tenue à la surpression tout en ayant une masse optimisée. En outre, dans le cas d'aéronef équipé d'un dispositif de sécurité selon l'invention, cet agencement du coffre permet également d'obtenir une bonne tenue au cyclage pression/dépression lié aux atterrissages, décollages et vols en altitude.

De manière privilégiée, la pièce d'occultation 400 est formée en continuité de matière. Elle comprend des zones amincies 410 formant au moins une partie adaptée à se déchirer à la pression seuil Ps. Ces zones amincies forment des zones fragilisées. L'épaisseur et la forme de l'amincissement est calculée pour provoquer une déchirure de l'amincissement lorsque la pression à l'intérieur du dispositif de sécurité et en particulier dans le conduit au niveau de la pièce d'occultation dépasse la valeur seuil prédéterminée, Ps.

Selon un mode de réalisation, la pièce d'occultation est en métal, par exemple choisi parmi la liste constituée de l'aluminium et ses alliages, du cuivre et ses alliages, du laiton, des aciers nickelés, des aciers inoxydables, du titane et ses alliages, du nickel et ses alliages.

Par exemple et avantageusement, la pièce d'occultation 400 comporte une zone amincie formant une courbe fermée autour d'une partie 420 susceptible de se détacher au moins partiellement de la pièce d'occultation quand ladite zone amincie se déchire à la pression seuil Ps. Dans l'exemple représenté et non limitatif, la courbe est un cercle.

Par exemple, la zone amincie formant une courbe fermée est une rainure, par exemple en V ou en U.

Selon un autre exemple, la pièce d'occultation est constituée d'une pluralité de matériaux reliés entre eux par des liaisons et au moins une liaison est adaptée à se déchirer à la pression seuil Ps. Une telle pièce d'occultation peut être par exemple constituée d'un anneau en un premier matériau, par exemple un anneau métallique, sur ou dans lequel est fixé une plaque ou un film d'un second matériau, par exemple un matériau organique.

En fonctionnement, lorsque du gaz est libéré par un générateur électrochimique disposé dans le coffre d'un dispositif de sécurité selon l'invention, le gaz « s'échappe » par l'ouverture 120 du coffre et circule dans le conduit vers la deuxième ouverture 312 du conduit où se situe la pièce d'occultation. Le gaz est refroidi dans le conduit et s'accumule dans celui-ci augmentant ainsi la pression à l'intérieur du dispositif de sécurité et en particulier au niveau de la pièce d'occultation 400. La surpression des gaz à l'intérieur du dispositif de sécurité 1 crée sur la pièce d'occultation une force de poussée dirigée vers l'extérieur du dispositif de sécurité 2.

Lorsque le gaz atteint la pression seuil Ps, la force de poussée entraîne la rupture de la partie fragilisée de la pièce d'occultation par un déchirement de la partie adaptée à se déchirer à cette pression seuil Ps de la pièce d'occultation se produit. Le gaz peut alors s'échapper par l'ouverture de la paroi de l'habitacle, c'est-à-dire vers l'extérieur de l'équipement intégrant les générateurs électrochimiques sans fuite avec le milieu dans lequel est confiné l'équipement.

L'invention concerne également un véhicule comprenant un habitacle séparé de l'extérieur par une paroi, dans laquelle est pratiquée une ouverture ouvrant sur l'extérieur. Par exemple, le véhicule est un aéronef, un moyen de transport ferroviaire, un moyen de transport routier, un moyen de transport maritime ou fluvial.

Selon l'invention, le véhicule comporte en outre un dispositif de sécurité tel que décrit précédemment disposé dans l'habitacle et dont la pièce d'occultation est fixée de manière étanche aux gaz à ladite ouverture.

L'invention concerne également tout bâtiment comportant un véhicule tel que décrit ci-dessus.

L'invention garantit ainsi la non-intrusion d'eau ou d'autre corps étrangers dans le système de batterie et garantit son intégrité tout au long de sa vie. Ce dispositif de sécurité selon l'invention permet ainsi de garantir la performance de la batterie et ce en toute sécurité pour l'utilisateur par la maîtrise de l'évènement redouté, et dans le cas où la batterie est soumise à des variations de pression, notamment pour des applications aéronautiques et ou immergées.

En outre, l'agencement particulier de ce dispositif de sécurité lui procure un poids léger et une certaine compacité qui sont des avantages pour des applications aéronautiques et ou immergées.

### EXEMPLE

La Demanderesse a réalisé des tests sur un dispositif de sécurité selon l'invention dont le conduit est un tuyau en silicone, de diamètre 30 mm, de longueur 1,40 m et dont la paroi a une épaisseur de 5 mm.

La pièce d'occultation choisie est un disque de rupture commercialisé par la société HELYON, de référence commerciale C90rb2,6-05v DN 50 (Résistant au vide, comprenant une bague de maintien en inox 316, un disque composite plat, une membrane d'étanchéité Monel (fragmentant), dont le diamètre extérieur est de 90 mm et le diamètre de rupture est de 50 mm).

Les jonctions entre le coffre et la pièce d'occultation ainsi qu'entre le conduit et la pièce d'occultation sont assurées par des colliers inox à serrage par vis. Ces jonctions respectent les exigences de la norme ABS0395 utilisée dans le domaine de l'aéronautique.

Des essais ont montré que la température maximum mesurée dans le volume mort de l'enveloppe batterie était de l'ordre de 490°C tandis qu'en sortie du conduit, elle n'était que de 270°C, montrant ainsi qu'un conduit correctement dimensionné permet un refroidissement des gaz conséquent. Ainsi, il autorise une marge de sécurité afin de garantir la non-inflammation des gaz en sortie du conduit, la température d'inflammation des gaz fluorés étant d'environ 350 °C.

Il a également été montré que l'enveloppe de batterie est capable de contenir une surpression des gaz généré par un emballement thermique et que le conduit permet bien d'extraire les gaz vers une sortie identifiée et contrôlée.

En outre, ces tests ont montrés que l'enveloppe de la batterie, c'est-à-dire le coffre, le couvercle et le conduit sont capables de supporter une surpression supérieure à celle de la rupture de la pièce d'occultation. Dans ces essais, la pièce d'occultation comprenait une partie adaptée à se déchirer à une pression seuil de 4 bars. Seule la pièce d'occultation a cédé sous cette pression.

Bien entendu, la présente invention n'est pas limitée aux exemples et aux modes de réalisation décrits et représentés, mais elle est susceptible de nombreuses variantes accessibles à l'homme du métier.

## Revendications

1. Dispositif de sécurité (1) pour une batterie de générateurs électrochimiques au lithium comprenant :
- un coffre (100) destiné à être placé dans un habitacle et configuré pour loger une pluralité de générateurs électrochimiques au lithium, ledit coffre comprenant une pluralité de parois (111, 112, 113, 114, 115) assemblées, une ouverture (130) permettant l'introduction des générateurs électrochimiques ;
- un couvercle (200) destiné à être agencé de manière étanche aux gaz sur l'ouverture du coffre permettant l'introduction des générateurs électrochimiques ;
- une ouverture (120) formant évent située dans une des parois du coffre (100) ou située dans le couvercle (200),
- un conduit (300) comprenant deux ouvertures (311, 312) où une des ouvertures (311) est reliée de manière étanche aux gaz à l'ouverture (120) formant évent du coffre ;
- une pièce d'occultation (400) disposée de manière étanche aux gaz à une ouverture d'une paroi de l'habitacle et à la deuxième ouverture (312) du conduit, et où ladite pièce d'occultation comprend une partie (410) adaptée à se déchirer à une pression seuil, Ps ;
où les parois du coffre, le couvercle, le conduit et la pièce d'occultation sont solidarisés entre eux de manière à assurer une étanchéité aux gaz jusqu'à une pression supérieure à la pression seuil, Ps, et où les matériaux du coffre, du couvercle, du conduit et de la pièce d'étanchéité, susceptibles d'être en contact avec des gaz émis par les générateurs électrochimiques au lithium, sont des matériaux dimensionnés pour résister aux gaz émis par lesdits générateurs électrochimiques au lithium et résistants au moins à une température de 150 °C.

2. Dispositif de sécurité selon la revendication précédente où la pression seuil, Ps, est comprise entre 0,5 bar et 5 bar, par exemple supérieure ou égale à 1 bar et/ou inférieure ou égale à 2 bar.

3. Dispositif de sécurité selon la revendication précédente où la paroi de l'habitacle est une partie d'une carlingue d'aéronef et où la pression seuil, Ps, est comprise entre 1 bar et 5 bar, par exemple supérieure ou égale à 1,5 bar et/ou inférieure ou égale à 3 bar.

4. Dispositif de sécurité selon l'une quelconque des revendications précédentes où le conduit (300) est un tuyau rigide ou un tuyau souple rigidifié.

5. Dispositif de sécurité selon la revendication précédente où le tuyau a un diamètre compris entre 10 mm et 100 mm et une longueur comprise entre 0,50 m et 3 m.

6. Dispositif de sécurité selon l'une quelconque des revendications précédentes où le coffre est formé d'une pluralité de plaques en un matériau choisi parmi la liste constituée de l'aluminium et de ses alliages, des aciers, du titane et de ses alliages et où lesdites plaques sont pliées et/ou soudées entre elles.

7. Dispositif de sécurité selon la revendication précédente où les plaques pliées et/ou soudées entre elles sont au nombre de cinq, assemblées en forme parallélépipède, avec une plaque de fond (111) opposée à l'ouverture (130) du coffre, deux plaques latérales (112, 113) d'une première épaisseur e1 disposées face à face et deux autres plaques latérales (114, 115) d'une deuxième épaisseur e2 disposées face à face, où l'ouverture formant évent est aménagée dans une des plaques d'épaisseur e2 et où l'épaisseur e1 est comprise entre 1 et 2 mm et l'épaisseur e2 est comprise entre 1,5 fois et 3 fois l'épaisseur e1.

8. Dispositif de sécurité selon l'une quelconque des revendications précédentes où la pièce d'occultation (400) est en continuité de matière et comprend des zones amincies (410) formant au moins une partie adaptée à se déchirer à la pression seuil, Ps.

9. Dispositif de sécurité selon la revendication précédente où une zone amincie forme une courbe fermée autour d'une partie (420) susceptible de se détacher au moins partiellement de la pièce d'occultation quand ladite zone amincie se déchire à la pression seuil, Ps.

10. Dispositif de sécurité selon la revendication précédente où la zone amincie formant une courbe fermée est une rainure, par exemple en V ou en U.

11. Dispositif de sécurité selon l'une quelconque des revendications 1 à 7 où la pièce d'occultation est constituée d'une pluralité de matériaux reliés entre eux par des liaisons et où au moins une liaison est adaptée à se déchirer à une pression seuil, Ps.

12. Dispositif de sécurité selon l'une quelconque des revendications précédentes comprenant en outre un dispositif de refroidissement du conduit.

13. Véhicule comprenant un habitacle séparé de l'extérieur par une paroi, dans laquelle est pratiquée une ouverture ouvrant sur l'extérieur, et un dispositif de sécurité selon l'une quelconque des revendications précédentes, disposé dans l'habitacle, dont la pièce d'occultation est fixée de manière étanche aux gaz à ladite ouverture.

14. Véhicule selon la revendication précédente où le véhicule est choisi dans la liste constituée d'un aéronef, d'un moyen de transport ferroviaire, d'un moyen de transport routier, d'un moyen de transport maritime ou fluvial.

15. Bâtiment comprenant un habitacle séparé de l'extérieur par une paroi, dans laquelle est pratiquée une ouverture ouvrant sur l'extérieur, et un dispositif de sécurité selon l'une quelconque des revendications 1 à 12 , disposé dans l'habitacle, dont la pièce d'occultation est fixée de manière étanche aux gaz à ladite ouverture.

16. Procédé mettant en oeuvre un dispositif de sécurité selon l'une quelconque des revendications 1 à 12 où, en cas de la libération de gaz par un générateur électrochimique disposé dans le coffre, le gaz est refroidi dans le conduit et produit un déchirement de la partie adaptée à se déchirer à une pression seuil, Ps, de la pièce d'occultation quand le gaz atteint la pression seuil, Ps.

## Patentansprüche

1. Sicherheitsvorrichtung (1) für eine Batterie von elektrochemischen Lithiumgeneratoren, die Folgendes umfasst:
- einen Kasten (100), der dazu bestimmt ist, in einem Fahrzeuginnenraum platziert zu werden, und der konfiguriert ist, um eine Mehrzahl elektrischer Lithiumgeneratoren aufzunehmen, wobei der Kasten eine Mehrzahl zusammengefügter Wände (111, 112, 113, 114, 115), eine Öffnung (130), die das Einführen der elektrochemischen Generatoren erlaubt, umfasst,
- einen Deckel (200), der dazu bestimmt ist, gasdicht auf der Öffnung des Kastens eingerichtet zu sein, der das Einführen der elektrochemischen Generatoren erlaubt,
- eine Öffnung (120), die eine Entlüftung bildet, die in einer der Wände des Kastens (100) oder in dem Deckel (200) liegt,
- eine Leitung (300), die zwei Öffnungen (311, 312) umfasst, wobei eine der Öffnungen (311) gasdicht mit der Öffnung (120), die die Entlüftung des Kastens bildet, verbunden ist,
- ein Verdeckungsteil (400), das gasdicht an einer Öffnung einer Wand des Fahrzeuginnenraums und an der zweiten Öffnung (312) der Leitung angeordnet ist, und wobei das Verdeckungsteil einen Teil (410) umfasst, der angepasst ist, um bei einem Schwellendruck Ps zu zerreißen,
wobei die Wände des Kastens, der Deckel, die Leitung und das Verdeckungsteil fest untereinander derart verbunden sind, dass sie eine gasdichte Abdichtung bis zu einem Druck über dem Schwellendruck Ps sicherstellen, und wobei die Werkstoffe des Kastens, des Deckels, der Leitung und des Abdichtteils, die mit den von den elektrochemischen Lithiumgeneratoren abgegebenen Gasen in Berührung sein können, Werkstoffe sind, die bemessen sind, um den Gasen standzuhalten, die von den elektrochemischen Lithiumgeneratoren abgegeben werden, und mindestens einer Temperatur von 150 °C standhalten.

2. Sicherheitsvorrichtung nach dem vorhergehenden Anspruch, wobei der Schwellendruck Ps zwischen 0,5 bar und 5 bar liegt, zum Beispiel größer oder gleich 1 bar und/oder kleiner oder gleich 2 bar.

3. Sicherheitsvorrichtung nach dem vorhergehenden Anspruch, wobei die Wand des Fahrzeuginnenraums ein Teil eines Luftfahrzeugrumpfes ist, und wobei der Schwellendruck Ps zwischen 1 bar und 5 bar liegt, zum Beispiel größer oder gleich 1,5 bar und/oder kleiner oder gleich 3 bar.

4. Sicherheitsvorrichtung nach einem der vorhergehenden Ansprüche, wobei die Leitung (300) ein starrer Schlauch oder ein versteifter biegsamer Schlauch ist.

5. Sicherheitsvorrichtung nach dem vorhergehenden Anspruch, wobei das Rohr einen Durchmesser zwischen 10 mm und 100 mm und eine Länge zwischen 0,50 und 3 m hat.

6. Sicherheitsvorrichtung nach einem der vorhergehenden Ansprüche, wobei der Kasten aus einer Mehrzahl von Platten aus einem Werkstoff gebildet ist, der aus der Liste ausgewählt ist, die aus Aluminium und seinen Legierungen, Stählen, Titan und seinen Legierungen besteht, und wobei die Platten miteinander gefaltet und/oder zusammengeschweißt sind.

7. Sicherheitsvorrichtung nach dem vorhergehenden Anspruch, wobei fünf miteinander gefaltete und/oder zusammengeschweißte Platten vorhanden sind, die in Parallelepipedform zusammengefügt sind, mit einer Bodenplatte (111), die der Öffnung (130) des Kastens entgegengesetzt ist, zwei seitlichen Platten (112, 113) mit einer ersten Stärke e1, die einander gegenüberliegend angeordnet sind, und zwei anderen seitlichen Platten (114, 115) mit einer zweiten Stärke e2, die einander gegenüberliegend angeordnet sind, wobei die Öffnung, die eine Entlüftung bildet, in einer der Platten mit Stärke e2 eingerichtet ist, und wobei die Stärke e1 zwischen 1 und 2 mm liegt, und die Stärke e2 zwischen 1,5 Mal und 3 Mal der Stärke e1 liegt.

8. Sicherheitsvorrichtung nach einem der vorhergehenden Ansprüche, wobei das Verdeckungsteil (400) stoffschlüssige und verdünnte Zonen (410) umfasst, die mindestens einen Teil bilden, der angepasst ist, um bei dem Schwellendruck Ps zu zerreißen.

9. Sicherheitsvorrichtung nach dem vorhergehenden Anspruch, wobei die verdünnte Zone eine Kurve bildet, die um einen Teil (420) geschlossen ist, der sich mindestens teilweise von dem Verdeckungsteil ablösen kann, wenn die verdünnte Zone beim Schwellendruck Ps reißt.

10. Sicherheitsvorrichtung nach dem vorhergehenden Anspruch, wobei die verdünnte Zone, die eine geschlossene Kurve bildet, eine Rille, zum Beispiel in V oder in U ist.

11. Sicherheitsvorrichtung nach einem der Ansprüche 1 bis 7, wobei das Verdeckungsteil aus einer Mehrzahl von Werkstoffen besteht, die miteinander durch Verbindungen verbunden sind, und wobei mindestens eine Verbindung angepasst ist, um bei einem Schwellendruck Ps zu reißen.

12. Sicherheitsvorrichtung nach einem der vorhergehenden Ansprüche, die außerdem eine Kühlvorrichtung der Leitung umfasst.

13. Fahrzeug, das einen Fahrzeuginnenraum umfasst, der vom Äußeren durch eine Wand getrennt ist, in der eine Öffnung angelegt ist, die sich nach außen öffnet, und eine Sicherheitsvorrichtung nach einem der vorhergehenden Ansprüche, die in dem Fahrzeuginnenraum angeordnet ist, deren Verdeckungsteil gasdicht an der Öffnung befestigt ist.

14. Fahrzeug nach dem vorhergehenden Anspruch, wobei das Fahrzeug aus der Liste ausgewählt ist, die aus einem Luft-fahrzeug, einem Eisenbahntransportmittel, einem Straßentransportmittel, einem See- oder Flusstransportmittel besteht.

15. Bauwerk, das einen Fahrzeuginnenraum, der vom Äußeren durch eine Wand getrennt ist, in der eine Öffnung angelegt ist, die sich nach außen öffnet, und eine Sicherheitsvorrichtung nach einem der Ansprüche 1 bis 12, die in dem Fahrzeuginnenraum eingerichtet ist, dessen Verdeckungsteil gasdicht an der Öffnung befestigt ist, umfasst.

16. Verfahren, das eine Sicherheitsvorrichtung nach einem der Ansprüche 1 bis 12 umsetzt, wobei bei der Freisetzung von Gas durch einen elektrochemischen Generator, der in dem Kasten angeordnet ist, das Gas in der Leitung gekühlt wird und ein Zerreißen des Teils, der angepasst ist, um bei einem Schwellendruck Ps zu zerreißen, des Verdeckungsteils erzeugt, wenn das Gas den Schwellendruck Ps erreicht.

## Claims

1. A safety device (1) for a lithium electrochemical cell battery, comprising:
- a box (100) designed to be placed in a compartment and configured to house a plurality of lithium electrochemical cells, said box comprising a plurality of assembled walls (111, 112 113, 114, 115), an opening (130) making it possible to introduce the electrochemical cells;
- a cover (200) designed to be arranged gas-tightly on the opening of the box, allowing the introduction of the electrochemical cells;
- an opening (120) forming a vent situated in one of the walls of the box (100) or situated in the cover (200),
- a conduit (300) comprising two openings (311, 312) where one of the openings (311) is gas-tightly connected to the opening (120) forming a vent of the box;
- a covering part (400) positioned gas-tightly at an opening of a wall of the compartment and the second opening (312) of the conduit, and where said covering part comprises a portion (410) adapted to tear at a threshold pressure Ps;
where the walls of the box, the cover, the conduit and the covering part are secured to each other so as to ensure sealing against the gases up to a pressure above the threshold pressure Ps, and where the materials of the box, the cover, the conduit and the sealing part, capable of being in contact with the gases emitted by the lithium electrochemical cells, are materials dimensioned to withstand the gases emitted by said lithium electrochemical cells and withstanding at least a temperature of 150°C.

2. The safety device according to the preceding claim, in which the threshold pressure Ps is comprised between 0.5 bar and 5 bar, for example greater than or equal to 1 bar and/or less than or equal to 2 bar.

3. The safety device according to the preceding claim, in which the wall of the compartment is part of an aircraft cockpit and the threshold pressure Ps is comprised between 1 bar and 5 bar, for example greater than or equal to 1.5 bar and/or less than or equal to 3 bar.

4. The safety device according to any one of the preceding claims, in which the conduit (300) is a rigid hose or a rigidified flexible hose.

5. The safety device according to the preceding claim, in which the hose has a diameter comprised between 10 mm and 100 mm and a length comprised between 0.50 m and 3 m.

6. The safety device according to any one of the preceding claims, in which the box is formed by a plurality of plates made from a material chosen from among the list consisting of aluminum and alloys thereof, steels, titanium and alloys thereof, and said plates are bent and/or welded to each other.

7. The safety device according to the preceding claim, in which there are five plates bent and/or welded to each other, assembled in a cuboid form, with a bottom plate (111) opposite the opening (130) of the box, two side plates (112, 113) with a first thickness e1 positioned across from each other and two other side plates (114, 115) with a second thickness e2 positioned across from each other, where the vent-forming opening is formed in one of the plates with thickness e2 and where the thickness e1 is comprised between 1 and 2 mm and the thickness e2 is comprised between 1.5 times and 3 times the thickness e1.

8. The safety device according to any one of the preceding claims in which the covering part (400) is continuously connected and comprises thin areas ( 410) forming at least one portion adapted to tear at the threshold pressure Ps.

9. The safety device according to the preceding claim, in which a thin area forms a closed curve around a part (420) capable of at least partially detaching from the covering part when said thin area tears at the threshold pressure Ps.

10. The safety device according to the preceding claim, in which the thin area forming a closed curve is a slot, for example V-shaped or U-shaped.

11. The safety device according to any one of the claims 1 to 7, in which the covering part is made of a plurality of materials connected to each other by bonds and at least one bond can tear at a threshold pressure Ps.

12. The safety device according to any one of the preceding claims, additionally comprising a device for cooling the conduit.

13. A vehicle comprising a passenger compartment separated from the outside by a wall, in which an opening is formed opening to the outside, and a safety device according to any one of the preceding claims, positioned in the compartment, whereof the covering part is gas-tightly fixed to said opening.

14. The vehicle according to the preceding claim, in which the vehicle is chosen from the list consisting of an aircraft, rail transportation means, road transportation means, maritime or river transportation means.

15. A building comprising a compartment separated from the outside by a wall, in which an opening is formed opening to the outside, and a safety according to any one of claims 1 to 12, positioned in the compartment, whereof the covering part is gas-tightly fixed to said opening.

16. A method implementing a safety device according to any one of claims 1 to 12, where, in the event gases are released by the electrochemical cells positioned in the box, the gas is cooled in the conduit and produces tearing of the portion designed to tear at a threshold pressure Ps of the covering part when the gas reaches the threshold pressure Ps.
